(19) Europäisches Patentamt
European Patent Office
Office européen des brevets

(11) **EP 4 166 611 A1**

(12) **EUROPEAN PATENT APPLICATION**

(43) Date of publication:
**19.04.2023 Bulletin 2023/16**

(21) Application number: **21202103.4**

(22) Date of filing: **12.10.2021**

(51) International Patent Classification (IPC):
***C08L 23/10*** (2006.01)    ***C08L 23/12*** (2006.01)
***C08L 23/14*** (2006.01)

(52) Cooperative Patent Classification (CPC):
(C-Sets available)
**C08L 23/14; C08L 23/10; C08L 23/12;**
**C08L 23/142;** C08L 2205/025; C08L 2207/20

(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
 • **MILEVA, Daniela**
  **4021 Linz (AT)**

 • **BRAUN, Hermann**
  **4021 Linz (AT)**
 • **TRANCHIDA, Davide**
  **4021 Linz (AT)**
 • **TRAN, Tuan Anh**
  **4021 Linz (AT)**
 • **ZINÖCKER, Erich**
  **4021 Linz (AT)**
 • **LEHNER, Gisela**
  **4021 Linz (AT)**

(74) Representative: **Maiwald GmbH**
**Elisenhof**
**Elisenstraße 3**
**80335 München (DE)**

(54) **UPGRADED HIGH GLOSS RECYCLING COMPOSITION**

(57)    A polypropylene composition (C) obtainable by blending: a mixed-plastics polypropylene blend with a virgin polypropylene homopolymer

(52) Cooperative Patent Classification (CPC): (Cont.)

C-Sets
**C08L 23/12, C08L 23/142;**
**C08L 23/142, C08L 23/12**

## Description

### Field of the Invention

The present invention relates to upgraded recycling compositions.

### Background

Gloss has been mainly evaluated in the field of heterophasic polypropylene compositions. However, gloss is also a problem when it comes to recycling polyolefin materials. This is especially true when white color is desired which applies for many final applications. The conventional way of lightening up recyclates which are commonly grey is accomplished by adding titanium dioxide in considerable amounts. Titanium dioxide often jeopardizes mechanical properties particularly impact performance when used in amounts of 6 wt.-% or higher. Very little is known as far as recyclates are concerned. For example, KIM, Soon-Deok, et al. "Effect of Ethylene-Propylene Copolymer Composition on Morphology and Surface Properties of Impact Poly (propylene) Copolymer" In: Macromolecular Symposia. Weinheim: WILEY-VCH Verlag, 2012. S. 27-33 have evaluated the influence of ethylene-propylene rubber (EPR) composition in heterophasic PP (Samsung Total Petrochemicals) on the gloss. Another problem of recycling materials is black spot contamination which should be as low as possible. Black spot contamination is particularly a big problem when it comes to injection molding of white polypropylenes. Thus, there remains the need for upgrading such recycling streams addressing the above mentioned needs.

### Summary of the Invention

The present invention is based on the surprising finding that a recyclate consisting essentially of propylene derived monomer units and having essentially white color can be blended with a virgin polypropylene homopolymer to yield good gloss.

In its broadest aspect, the present invention insofar provides a polypropylene composition (C) being a mixed-plastics polypropylene blend wherein the polymeric part of said polypropylene composition (C) has

> (i) a crystalline fraction (CF) content determined according to CRYSTEX QC analysis in the range from 91.0 to 96.0 wt.-% with respect to the polymeric part of said polypropylene composition (C), and
>
> (ii) a soluble fraction (SF) content determined according to CRYSTEX QC analysis in the range from 4.0 to 9.0 wt.-% .-% with respect to the polymeric part of said polypropylene composition (C), and
>
> (iii) a total ethylene content (C2(total)) of 2.5 to 5.0 wt.-% as determined by FT-IR spectroscopy calibrated by quantitative $^{13}$C-NMR spectroscopy; and
>
> (iv) said crystalline fraction (CF) has a propylene content (C3(CF)) as determined by FT-IR spectroscopy calibrated by quantitative $^{13}$C-NMR spectroscopy, in the range from 95.0 to 99.0 wt.-%; and
>
> (v) said soluble fraction (SF) has an intrinsic viscosity (iV(SF)) in the range from 1.25 to below 1.75 dl/g, and
>
> (vi) said soluble fraction (SF) has an ethylene content C2(SF)) as determined by FT-IR spectroscopy calibrated by quantitative $^{13}$C-NMR spectroscopy, in the range from 16.0 to 30.0 wt.-%; and
>
> (vii) the polypropylene composition (C) has inorganic residues as measured by calcination analysis (TGA) according to DIN ISO 1172:1996 of 0.1 to 3.0 wt.-%, preferably 1.0 to 3.0 wt.-%, optionally 1.7 to 2.9 wt.-%with respect to the polypropylene composition (C); and
>
> (viii) optionally the polypropylene composition (C) has a CIELAB color space (L*a*b*) with L* from 91.0 to 97.0; and
>
> (ix) the polypropylene composition (C) has a content of limonene as determined by using solid phase microextraction (HS-SPME-GC-MS) of from 0.10 ppm to less than 25 ppm, preferably 0.10 ppm to less than 5 ppm, most preferably 0.10 ppm to less than 2 ppm.

The present invention further concerns an article comprising the polypropylene composition (C) as described herein in an amount of at least 98.0 wt.-% with respect to the article.

It is a big advantage of the present invention that massive addition of TiO$_2$ is not necessary. This avoids the drawbacks of such filler addition, namely lowered impact properties.

Although not at all desirable from an environmental perspective, it is possible to include carbon black in the composition. Addition of carbon black results in black compositions having good gloss. Ideally, the white or colorless recyclates are not combined with carbon black as this may be seen as downgrading the polymers. However, it should be understood that customers frequently ask for super gloss materials having black color. Providing such a material still originating in a considerable amount from recycled material can be seen as a benefit although a downgrading takes place.

Mixed-plastics polypropylene blend means that polymers other than polypropylene homo- or copolymers can also be present. This situation is caused by the recycling nature of the blend. When using household waste as a feedstock it is virtually impossible to avoid residual amounts of polystyrene, polyamide, SEBS and the like. However, substantial amounts are excluded by the CRYSTEX parameters.

Recycling nature of the polypropylene composition (C) is further reflected by the content of limonene as determined by using solid phase microextraction (HS-SPME-GC-MS) of from 0.10 ppm to less than 25 ppm, preferably 0.10 ppm to less than 5 ppm, most preferably 0.10 ppm to less than 2 ppm. Limonene originates inter alia from detergents and can be found in all household-waste recycling materials. It is possible to lower the limonene content by treatment such as aeration.

Virgin polymers stand in contrast to recyclates. A virgin polymer denotes a polymer which has not undergone a first life-time, i.e. which was not used by consumers. A virgin polymer does not include limonene as discussed above.

In a further preferred aspect, the polypropylene composition (C) according to the present invention has a CIELAB color space (L*a*b*) with L* from 91.0 to 97.0. In this embodiment, down-grading of the starting recyclate does not take place and the surprisingly low amount of defect, i.e. low black spot contamination becomes relevant.

It is preferred that the crystalline fraction (CF) content determined according to CRYSTEX QC analysis is in the range from 91.0 to 94.0 wt.-% with respect to the polymeric part of said polypropylene composition (C) and that the soluble fraction (SF) content determined according to CRYSTEX QC analysis is in the range from 6.0 to 9.0 wt.-% with respect to the polymeric part of said polypropylene composition (C).

It is particularly preferred that the polypropylene composition (C) according to the present invention does not contain $TiO_2$ in amounts higher than 3.0 wt.-% based on the total weight of the polypropylene composition (C), more preferably measured as described in the specification. The polypropylene composition (C) according to the present invention preferably contains $TiO_2$ in amounts of 1.0 to 2.8 wt.-% based on the total weight of the polypropylene composition (C), more preferably measured as described in the specification.

The polypropylene composition (C) according to the present invention preferably has a melt flow rate MFR (230 °C, 2.16 kg; ISO 1133) in the range of 14 to 21 g/10 min. This MFR range renders the polypropylene composition (C) particularly suitable for standard molding applications.

In another aspect, the polypropylene composition (C) preferably has a flexural modulus (ISO 178) of 1350 to 1700 MPa, preferably 1400 to 1600 MPa.

The polypropylene composition (C) as described herein is preferably nucleated with at least one nucleating agent selected from the group consisting of polymeric nucleating agents, phosphate-derived nucleating agents, sorbitol-derived nucleating agents, metal salts of aromatic or aliphatic carboxylic acids, inorganic nucleating agents, such as talc and mixtures thereof.

The incorporation of virgin propylene homopolymers allows the easy incorporation of polymeric nucleating agents, particularly polymeric nucleating agents as polyvinylcylcohexane. It is also possible and preferred to incorporate low amounts of talc for nucleation which may be preferably combined with a polymeric nucleating agent such as incorporation of polyvinylcylcohexane. When talc is used, the amount should preferably be not higher than 1.0 wt.-% with respect to the polypropylene composition (C).

The polypropylene composition (C) according to the present invention is preferably obtainable by blending:

(a) 45.0 to 85.0 wt.-%, based on the total weight of the composition (C), of a mixed-plastics polypropylene blend, and

(b) 15.0 to 55.0 wt.-%, based on the total weight of the composition (C), of a virgin polypropylene homopolymer, the virgin polypropylene homopolymer having

(i) an MFR (230 °C, 2.16 kg; ISO 1133) in the range of 12 to 27 g/10 min; and
(ii) a flexural modulus (ISO 178) of at least 1200 MPa, preferably 1300 MPa to 2200 MPa; and

(c) 0.0 to 3.0 wt.-%, based on the total weight of the composition (C) of additives preferably selected from the group consisting of antioxidants, UV stabilizers, anti-crystallization agents, calcium stearate and mixtures thereof; and

(d) 0.0 to 3.5 wt.-%, based on the total weight of the composition of a white pigment masterbatch whereby said white pigment is present in an amount of 60 to 80 wt.-% with respect to said white pigment masterbatch; and

(e) 0.0 to 4.0 wt.-%, based on the total weight of the composition of a carbon black masterbatch, wherein said carbon black is present in an amount of 30 to 50 wt.-% with respect to said carbon black masterbatch;

whereby components a) to e) add up to 100 wt.-%.

Components (c), (d) and (e) are actually optional which is indicated by the "0.0 wt.-%", i.e. these components need not be present. However, it is particularly preferred that component (c), i.e. additives are used in amounts of 0.5 to 2.5 wt.-%.

It is also preferred for reasons of recycling economy that a carbon black masterbatch is not added. Thus, it is particularly preferred that the carbon black amount of the polypropylene composition (C) is below 0.05 wt.-%, preferably is as low as possible. It will be understood by the skilled person that perfect absence of carbon black is virtually impossible in recyclates.

The mixed-plastics polypropylene blend, also denoted recyclate herein, is a recycled material, i.e. has been used by consumers in a first life. The recycling nature easily can be traced back for example by measuring limonene.

The polypropylene composition (C) according to the present invention preferably has a crystallization temperature Tc of 124 to 128 °C (DSC, ISO11357).

The polypropylene composition (C) according to the present invention preferably has a gloss (GU; 60 °, measured as described in the experimental part) of 71 to 80, more preferably from 74 to 80, most preferably 76 to 80..

The polypropylene composition (C) as described herein is preferably present in the form of pellets.

The present invention further concerns an article comprising the polypropylene composition (C) as described herein in an amount of at least 98.0 wt.-% with respect to the article. The article is preferably an injection molded article.

The invention will now be described with reference to the following non-limiting examples.

**Experimental Part**

The following definitions of terms and determination methods apply for the above general description of the invention as well as to the below examples unless otherwise defined.

Measurement Methods

**a) CRYSTEX**

**Determination of Crystalline and soluble fractions and their respective properties (IV and Ethylene content)**

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3)^2 + f*\text{Abs(CH)}*\text{Abs(CH}_3) \quad \text{(Equation 1)}$$

$$\text{CH}_3/1000\text{C} = a + b*\text{Abs(CH)} + c*\text{Abs(CH}_3) + d*(\text{Abs(CH}_3)/\text{Abs(CH)}) + e*(\text{Abs(CH}_3)/\text{Abs(CH)})^2 \quad \text{(Equation 2)}$$

The constants a to e for equation 1 and a to f for equation 2 were determined by using least square regression analysis.

The $CH_3/1000C$ is converted to the ethylene content in wt.-% using following relationship:

$$\text{Wt.-\% (Ethylene in EP Copolymers)} = 100 - CH_3/1000TC * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt%. The determined XS calibration is linear:

$$\text{Wt.-\% XS} = 1{,}01 * \text{Wt.-\% SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$\text{IV (dL/g)} = a * Vsp/c \qquad \text{(equation 5)}$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt% SF, wt% C2, IV).

**b) Quantification of microstructure by NMR spectroscopy (calibration only)**

Quantitative nuclear-magnetic resonance (NMR) spectroscopy was used for calibration.

Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probehead at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.

Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( E / ( P + E )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.

The mole percent comonomer incorporation was calculated from the mole fraction:

$$E \, [mol\%] = 100 * fE$$

The weight percent comonomer incorporation was calculated from the mole fraction:

$$E \, [wt\%] = 100 * ( fE * 28.06 ) / ( (fE * 28.06) + ((1-fE) * 42.08) ).$$

**c) Tensile modulus and tensile strain at break** were measured according to ISO 527-2 (cross head speed = 1 mm/min; test speed 50 mm/min at 23 °C) using injection molded specimens as described in EN ISO 1873-2 (dog bone shape, 4 mm thickness). The measurement is done after 96 h conditioning time of the specimen.

**d) Flexural Modulus:** The flexural modulus was determined in 3-point-bending according to ISO 178 on injection molded specimens of 80 x 10 x 4 mm prepared in accordance with ISO 294-1:1996.

**e) Impact strength** was determined as notched Charpy impact strength (1eA) (non-instrumented, ISO 179-1 at +23 °C) according to ISO 179-1 eA at +23 °C on injection moulded specimens of 80 x 10 x 4 mm prepared according to EN ISO 1873-2.

**f) Density:** The density is measured according to ISO 1183-187. Sample preparation is done by compression moulding in accordance with ISO 1872-2:2007.

**g) Inorganic residues:** TGA according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

**h) MFR:** melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

**i) CIELAB color space (L\*a\*b\*)**
In the CIE L\*a\*b\* uniform color space, the color coordinates are: L\*-the lightness coordinate; a\*-the red/green coordinate, with +a\* indicating red, and -a\* indicating green; and b\*-the yellow/blue coordinate, with +b\* indicating yellow, and -b\* indicating blue. The L\*, a\*, and b\*coordinate axis define the three dimensional CIE color space. Standard Konica/Minolta Colorimeter CM-3700A.

**j) Limonene detection**
Limonene quantification can be carried out using solid phase microextraction (HS-SPME-GC-MS) by standard addition.

50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**k) Gloss**

was measured according to DIN 67530 at an angle of 60° on injection molded grained specimens. Additional measurements were carried out at 85°. If not mentioned otherwise, "gloss" denotes the gloss measured according to DIN 67530 at an angle of 60 °.

**l) Melting temperature (Tm) and crystallization temperature (Tc)** DSC analysis, melting temperature (Tm) and heat of fusion (Hf), crystallization temperature (Tc) and melt enthalpy (Hm): measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. The crystallization temperature (Tc) was determined from the cooling step, while melting temperature (Tm) and melting enthalpy (Hm) are determined from the second heating step. The crystallinity was calculated from the melting enthalpy by assuming an Hm-value of 209 J/g for a fully crystalline polypropylene (see Brandrup, J., Immergut, E. H., Eds. Polymer Handbook, 3rd ed. Wiley, New York, 1989; Chapter 3).

**m) Black spot contamination**

Digital images of 5 injection moulded plaques were collected with a Canon EOS R6 camera. Settings were fixed such that a resolution of about 15 pixel/mm were obtained. Once the image had been converted to grey scale and the intensity normalized between 0 and 256, the exposure time was fixed such that a grey level of ca. 160 was obtained for the plaques.

Image analysis was performed with the Wavemetrics IgorPro software. A Region of Interest area was fixed inside the plaques, with size of 2100 x 1125 $pixels^2$. A Prewitt edge detection algorithm, set with threshold of 10, was used to identify the particles on the surface. The edge image was then analysed to gather information about the number and size of particles detected, with a minimum area of 5 pixels and excluding particles touching the border of the area analysed. This operation was repeated for the 5 plaques imaged, and a size distribution of particles was created. The number of particles was normalized by the total area imaged in the 5 plaques, and therefore a frequency of particles as $\#/cm^2$ was obtained. The particles were grouped in bins according to their size, with bin size of 0.05 $mm^2$.

**n) Quantitative TiO2 determination**

The instrument used for the XRF measurements was a wavelength dispersive device called Zetium (2,4kW) from Malvern Panalytical. The instrument was calibrated with polyolefin based standard sets from Malvern Panalytical. The method is used to determine the quantitative content of F, Na, Mg, Al, Si, P, S, Ca, Ti, Zn, Cr, Cd, Hg, Pb, As, Ni, Cu, Ba, Br, Cl, Sb, Sn in polyolefin matrix within defined ranges of these standards. The analysis are done under vacuum on a plaque with a diameter of 40 mm and a thickness of 2 mm. Elements which are not covered by a standard, or the content is outside of the calibrated standard range, are then analyzed with a semi-quantitative mode (Omnian). The semi-quantitative mode covers the elements Be-U. The TiO2 content was calculated by multiplying the Ti content by 1.67.

**Examples**

A post-consumer plastic waste was coarsely sorted as to polymer nature and as to color. In a further step, only white and colorless parts were selected. The selected parts were subjected to milling, washing in an aqueous solution with various detergents and subsequent drying and screening. The pretreated post-consumer plastic material was further sorted thereby reducing colored parts. Upon extrusion into pellets, the pellets were subjected to aeration; aeration conditions: at 120°C air, preheating substrate. This was repeated with an entirely different post-consumer plastic waste stream. Recyclates PCR1 and PCR2 were obtained.

All examples were subjected to CRYSTEX QC analysis.

**Limonene content**

**Table 2:** Limonene content

| Sample | Limonene HS-SPME-GC-MS[1] |
|---|---|
| PCR1 PCR2 | 0.7 ppm 0.9 ppm |
| [1]Headspace Solidphase Microextraction. | |

E1 to E6 exemplify the present invention.

**Table 3: Results**

| PCR1 | RE1 | RE2 | PP1 (virgin homo) | PP2 (virgin homo + 0.4 wt.-% talc) | E1 (black) | E2 (black) | E3 (black) | E4 (white) | E5 (white) | E6 (white) | claims |
|---|---|---|---|---|---|---|---|---|---|---|---|
| | PCR2 | PP1 + PCR1 + CB-MB*** | PP2 + PCR1 + CB-MB*** | PP2 + PCR2 + CB-MB*** | PP2 + PCR1 | PP2 + PCR1 | PP1 + PCR1 | | | | |
| CF CRYSTEX * | 89.1 | 90.5 | | | 92.5 | 93.5 | 94.1 | 91.1 | 93.3 | 92.4 | 91.0 96.0 |
| SF CRYSTEX * | 10.9 | 9.5 | | | 7.5 | 6.5 | 5.9 | 8.9 | 6.7 | 7.6 | 4.0 9.0 |
| C2(total) | 5.3 | 4.5 | | | 3.9 | 4.0 | 3.9 | 4.8 | 3.2 | 3.8 | 2.5 5.0 |
| C3(total) | 94.7 | 95.5 | 100 | 100 | 96.1 | 96.0 | 96.1 | 95.2 | 96.8 | 96.2 | - |
| C3(CF) | | | | | 97.3 | 97.2 | 97.1 | 97.3 | 98.2 | 97.6 | 95.0 |
| | | | | | | | | | | | 99.0 |
| C2(SF) | | | - | - | 19.0 | 21.3 | 20.0 | 26.8 | 22.9 | 20.7 | 16.0 30.0 |
| iV (SF) | 1.88 | 1.56 | - | - | 1.45 | 1.58 | 1.39 | 1.72 | 1.46 | 1.29 | 1.25 1.75 |
| iV (CF) | 1.76 | 1.78 | 1.59 | 1.57 | 1.68 | 1.72 | 1.73 | 1.73 | 1.71 | 1.67 | - |
| Inorganic residues (TGA) wt.-% | 1.61 | 0.95 | 2.1 ***** | | n.m. | n.m. | n.m. | 2.5 | 2.9 | 2.1 | 0.1 3.0 |
| CIELAB L* | 90 | 54 | 98 ***** | - | - | - | - | 92 | 93 | 93 | opt. 91.0 97.0 |
| Limonene (ppm) | 0.7 | 0.9 | - | - | 0.3 | 0.3 | 0.5 | 0.6 | 0.3 | 0.3 | 0.1 25 |
| TiO$_2$ (wt.%) | yes | | Yes ***** | | n.m. | n.m. | n.m. | yes | yes | yes | < 3.0 (cl.2) |
| MFR$_2$ (g/min; 230°C) | 13 | 19 | 20 | 20 | 16 | 15 | 16 | 15 | 16 | 18 | 14 21 (cl.4) |
| Tc (DSC, °C) | 125 | 125 | 118 | 127 | 125 | 127 | 127 | 126 | 127 | 125 | 124 128(cl. 10) |

(continued)

| PCR1 | PCR2 | PP1 + PCR1 + CB-MB*** | PP2 + PCR1 + CB-MB*** | PP2 + PCR2 + CB-MB*** | PP2 + PCR1 | PP2 + PCR1 | PP1 + PCR1 | | | | |
|---|---|---|---|---|---|---|---|---|---|---|---|
| Gloss | n.m. | n.m. | 77 | n.m. | 72 | 72 | 74 | 77 | 77 | 77 | |
| Flexural modulus (MPa) | 1384 | 1268 | 1450 | 2100 | 1432 | 1585 | 1546 | 1447 | 1635 | 1473 | 1350 1700 (cl. 5) |
| wt.-% PCR | | | | | 50 PCR1 | 50 PCR1 | 50 PCR2 | 75 PCR1 | 50 PCR1 | 50 PCR1 | |
| wt.-% virgin | | | | | 45 (PP1) | 45 (PP2) | 45 (PP2) | 20 (PP2) | 45 (PP2) | 45 (PP1) | |
| wt.-% Black MB*** | | | 3 ****** | | 3 | 3 | 3 | | | | |
| wt.-% whiteMB** | | | | | | | | 3 | 3 | 3 | |
| wt.-% Stabilizer package | | | | residual up to 100 wt.-% | | | | | | | |
| Black spot **** | +- | +- | | | | | | + | + | + | |

*Crystex measures only the polymeric part of the polypropylene composition (C) properties of the polymer/organic part of the compound which is solved in the solvent used. Everything else what is not dissolved (like inorganic particles) is excluded.

** White masterbatch (MB): 70 wt.-% TiO2 with linear density polyethylene (LDPE) carrier.

*** Carbon black masterbatch = black masterbatch (MB): 40 wt% of carbon black pigment and linear density polyethylene (LDPE) carrier.

*****with 3 wt.-% white masterbatch, i.e. 70 wt.-% TiO2 70 wt% with linear density polyethylene (LDPE) carrier.

**** black spot rating: materials were considered good (abbreviated +) if the frequency of defects in the bin corresponding to particles with 0.1 mm$^2$ was lower than 0.4 particles/cm$^2$. PCR1 and PCR2 showed frequencies of defects of 0.5 particles/cm$^2$ which was rated moderate (abbreviated + -).

***** for CIELAB measurement / comparison only ****** added separately in a compounding step / 40 wt% of carbon black pigment and linear density polyethylene (LDPE) carrier

It can be seen that surprisingly high gloss and crystallization temperatures could be obtained.

**Claims**

1.  A polypropylene composition (C) being a mixed-plastics polypropylene blend wherein the polymeric part of said polypropylene composition (C) has

    (i) a crystalline fraction (CF) content determined according to CRYSTEX QC analysis in the range from 91.0 to 96.0 wt.-% with respect to the polymeric part of said polypropylene composition (C), and
    (ii) a soluble fraction (SF) content determined according to CRYSTEX QC analysis in the range from 4.0 to 9.0 wt.-% with respect to the polymeric part of said polypropylene composition (C), and
    (iii) a total ethylene content (C2(total)) of 2.5 to 5.0 wt.-% as determined by FT-IR spectroscopy calibrated by quantitative $^{13}$C-NMR spectroscopy; and
    (iv) said crystalline fraction (CF) has a propylene content (C3(CF)) as determined by FT-IR spectroscopy calibrated by quantitative $^{13}$C-NMR spectroscopy, in the range from 95.0 to 99.0 wt.-%; and ;
    (v) said soluble fraction (SF) has an intrinsic viscosity (iV(SF)) in the range from 1.25 to below 1.75 dl/g, and
    (vi) said soluble fraction (SF) has an ethylene content C2(SF)) as determined by FT-IR spectroscopy calibrated by quantitative $^{13}$C-NMR spectroscopy, in the range from 16.0 to 30.0 wt.-%; and
    (vii) the polypropylene composition (C) has inorganic residues as measured by calcination analysis (TGA) according to DIN ISO 1172:1996 of 0.1 to 3.0 wt.-%, preferably 1.0 to 3.0 wt.-%, more preferably 1.7 to 2.9 wt.-% with respect to the polypropylene composition (C); and
    (viii) optionally the polypropylene composition (C) has a CIELAB color space (L*a*b*) with L* from 91.0 to 97.0; and
    (ix) the polypropylene composition (C) has a content of limonene as determined by using solid phase microextraction (HS-SPME-GC-MS) of from 0.10 ppm to less than 25 ppm, preferably 0.10 ppm to less than 5 ppm, most preferably 0.10 ppm to less than 2 ppm.

2.  The polypropylene composition (C) according to claim 1, which does not contain TiO2 in amounts higher than 3.0 wt.-% based on the total weight of the polypropylene composition (C).

3.  The polypropylene composition (C) according to claim 1 or 2 having a content of TiO2 of 1.0 to 2.8 wt.-% based on the total weight of the polypropylene composition (C).

4.  The polypropylene composition (C) according to any one of claims 1 to 3 having an MFR (230 °C, 2.16 kg; ISO 1133) in the range of 14 to 21 g/10 min.

5.  The polypropylene composition (C) according to any one of claims 1 to 4 having a flexural modulus (ISO 178) of 1350 to 1700 MPa.

6.  The polypropylene composition (C) according to any one of claims 1 to 5 containing carbon black below 0.05 wt.-% based on the total weight of the polypropylene composition (C).

7.  The polypropylene composition (C) according to any one of claims 1 to 6 being nucleated with at least one nucleating agent selected from the group consisting of polymeric nucleating agents, phosphate-derived nucleating agents, sorbitol-derived nucleating agents, metal salts of aromatic or aliphatic carboxylic acids, inorganic nucleating agents, such as talc, and mixtures thereof.

8.  A polypropylene composition (C) according to any one of claims 1 to 7 obtainable by blending:

    (a) 45.0 to 85.0 wt.-%, based on the total weight of the composition (C), of a mixed-plastics polypropylene blend, and
    (b) 15.0 to 55.0 wt.-%, based on the total weight of the composition (C), of a virgin polypropylene homopolymer, the virgin polypropylene homopolymer having

    (iii) an MFR (230 °C, 2.16 kg; ISO 1133) in the range of 12 to 27 g/10 min; and
    (iv) a flexural modulus (ISO 178) of at least 1200 MPa, preferably 1300 MPa to 2200 MPa; and

(c) 0.0 to 3.0 wt.-%, based on the total weight of the composition (C) of additives, preferably selected from the group consisting of antioxidants, UV-stabilizers, anti-crystallization agents, calcium stearate and mixtures thereof;

and

(d) 0.0 to 3.5 wt.-%, based on the total weight of the composition of a white pigment masterbatch whereby said white pigment is present in an amount of 60 to 80 wt-% with respect to said white pigment masterbatch; and

(e) 0.0 to 4.0 wt.-%, based on the total weight of the composition of a carbon black masterbatch, wherein said carbon black is present in an amount of 30 to 50 wt.-% with respect to said carbon black masterbatch; and whereby components a) to e) add up to 100 wt.-%.

9. The polypropylene composition (C) according to any one of the preceding claims, wherein the mixed-plastics polypropylene blend is a recycled material.

10. The polypropylene composition (C) according to any one of the preceding claims having a crystallization temperature Tc of 124 to 128 °C (DSC; ISO 11357).

11. The polypropylene composition (C) according to any one of the preceding claims having a gloss (GU; 60 °) of 71 to 80, preferably 76 to 80.

12. The polypropylene composition (C) according to any one of the preceding claims in the form of pellets.

13. Article comprising the polypropylene composition (C) according to any one of the preceding claims in an amount of at least 98.0 wt.-% with respect to the article.

Europäisches
Patentamt

European
Patent Office

Office européen
des brevets

**EUROPEAN SEARCH REPORT**

Application Number

EP 21 20 2103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/032459 A1 (BOREALIS AG [AT]) 25 February 2021 (2021-02-25) * the whole document * | 1-13 | INV. C08L23/10 C08L23/12 C08L23/14 |
| X | WO 2021/032460 A1 (BOREALIS AG [AT]) 25 February 2021 (2021-02-25) * the whole document * | 1-13 | |
| E | EP 3 916 047 A1 (BOREALIS AG [AT]) 1 December 2021 (2021-12-01) * the whole document * | 1-13 | |
| A | WO 2019/002345 A1 (BOREALIS AG [AT]) 3 January 2019 (2019-01-03) * examples IE1,IE2; table 2 * | 1-13 | |

TECHNICAL FIELDS
SEARCHED      (IPC)

C08L

The present search report has been drawn up for all claims

| Place of search | Date of completion of the search | Examiner |
|---|---|---|
| Munich | 14 March 2022 | Balmer, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)

14

## EP 4 166 611 A1

### ANNEX TO THE EUROPEAN SEARCH REPORT
### ON EUROPEAN PATENT APPLICATION NO.

EP 21 20 2103

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2022

| Patent document cited in search report | | Publication date | Patent family member(s) | | Publication date |
|---|---|---|---|---|---|
| WO 2021032459 | A1 | 25-02-2021 | NONE | | |
| WO 2021032460 | A1 | 25-02-2021 | NONE | | |
| EP 3916047 | A1 | 01-12-2021 | EP 3916047 | A1 | 01-12-2021 |
| | | | WO 2021239343 | A1 | 02-12-2021 |
| WO 2019002345 | A1 | 03-01-2019 | BR 112019027266 | A2 | 14-07-2020 |
| | | | CN 109790232 | A | 21-05-2019 |
| | | | EA 201992705 | A1 | 03-06-2020 |
| | | | EP 3645579 | A1 | 06-05-2020 |
| | | | KR 20200024245 | A | 06-03-2020 |
| | | | US 2020207964 | A1 | 02-07-2020 |
| | | | WO 2019002345 | A1 | 03-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Effect of Ethylene-Propylene Copolymer Composition on Morphology and Surface Properties of Impact Poly (propylene) Copolymer. **KIM, SOON-DEOK et al.** Macromolecular Symposia. WILEY-VCH Verlag, 2012, 27-33
- **LJILJANA JEREMIC ; ANDREAS ALBRECHT ; MARTINA SANDHOLZER ; MARKUS GAHLEITNER.** Rapid characterization of high-impact ethylene-propylene copolymer composition by crystallization extraction separation: comparability to standard separation methods. *International Journal of Polymer Analysis and Characterization,* 2020, vol. 25 (8), 581-596

- **G. SINGH ; A. KOTHARI ; V. GUPTA.** *Polymer Testing,* 2009, vol. 28 (5), 475
- **Z. ZHOU ; R. KUEMMERLE ; X. QIU ; D. REDWINE ; R. CONG ; A. TAHA ; D. BAUGH ; B. WINNIFORD.** *J. Mag. Reson.,* 2007, vol. 187, 225
- **V. BUSICO ; P. CARBONNIERE ; R. CIPULLO ; C. PELLECCHIA ; J. SEVERN ; G. TALARICO.** *Macromol. Rapid Commun.,* 2007, vol. 28, 1128
- **CHENG, H. N.** *Macromolecules,* 1984, vol. 17, 1950
- **W-J. WANG ; S. ZHU.** *Macromolecules,* 2000, vol. 33, 1157
- Polymer Handbook. Wiley, 1989